# EUROPEAN PATENT APPLICATION

(11) **EP 2 801 871 A2**
(43) Date of publication of application: **12.11.2014**
(21) Application number: 14425054.5
(22) Date of filing: 06.05.2014
(51) Int. Cl.: G05B 13/02, F25B 27/00, F25D 11/00

(54) **Cold logistic hub powered by photovoltaic energy**

(30) Priority: 08.05.2013 IT CH20130006
(71) Applicant: Solis S.p.A., 66043 Casoli - Chieti (IT)
(72) Inventor: Porreca, Fabio, Casoli - CH (IT)

(57) **Abstract**

The aim of the above-mentioned project is to make it possible to manage in total autonomy an industrial activity with an high energy consumption (or energy-consuming) as a logistics storehouse for low temperatures products (so called "colds"), disconnecting it from the necessary energy requirements and the consequent forced connection to the electric distribution network.

Photovoltaic energy in this case represents one of the key elements to realize this aim, taking the place of the current classic system of energy powering.

The management system named "Energy Management" actually provides for the regulation of the information interchanges and the various energy flows involved. The last but not the least element of the utility model is represented by the refrigeration section (system of generation, distribution and accumulation of the cold needed for the activity in question) adapted to regulate its own consumption by tracking the availability of photovoltaic energy.

Currently similar activities are managed without any regulation of the energy absorbed by the distribution network, complying only with the energy needs required by the refrigerator system.

The advantage of the innovation of such a project lies in the twisting of this concept, in fact without altering the main characteristics of a cold logistics hub, the *Energy Management* system, managing the consumption (and thus the output of each operating machinery) will regulate the energy distribution and storage on the basis of the availability of the photovoltaic energy produced.

## Description

The patent category it's possible to refer to is the so-called UTILITY MODEL because it constitutes a modification and an adaptation of systems already existing in independent ways but that, for the first time, are assembled and managed as integral parts thus giving life to a new productive system.

In this case the essence of the innovative nature of what SOLIS S.p.A. has designed and is creating in San Silvestro, Atessa (CH) lies in the adoption of innovative technical-planning solutions regarding plants, aimed at using a non-programmable energy source as the photovoltaic one in service of an "energy-consuming activity" user as the one of the logistics hub for the storage of low temperature products (deep frozen or anyway in need of particular climatic conditions, lower than the ones in natural environment).

The innovation of this project lies in the management of a non-programmable energy source (generator) entirely supporting the powering of a system of refrigerating rooms (user). The main element through which it's possible to connect these two structures so far considered incompatible lies in the design, the creation and the implementation of a new intelligent and completely autonomous system called "Energy Management System". The whole under the control of an innovative intelligent structure "*Energy Management*"*.*

### Description of the system:

### Photovoltaic generator:

A photovoltaic system constituted by 5 different typologies of systems identifying 5 different electric generators which optimize the production of energy in the different moments of the day.

### User or refrigeration unit:

A generation and distribution system constituted by a Hybrid system (NH3, CO2 and Glycol) made of machineries expressly planned to be able to track in a uniform and fast way the energy availability produced by the photovoltaic system, in order to fill, in every moment, all the quantity of energy made available by the "Energy Management" system.

### Management or Energy Management system:

Building Automation network (network of sensors expressly structured and dimensioned) interfacing, monitoring and managing both the structures (the photovoltaic generator and the user or refrigeration unit) all through a Fuzzy logic-based software system and a neural network of self-learning.

The basic problem connected to the substitution of a normal energy source as the one of the distribution network with a photovoltaic one, lies actually in the productive instability of such a source (non-programmable energy source). In photovoltaics the periodic variations in production (day-night, seasons) and the aperiodic ones (weather) have represented so far an unmanageable obstacle to the direct combination with a user as the one constituted by the refrigeration unit. The creation of an Energy Management system actually comes out with the aim of making this duo suitable.

An intelligent network as the one of the Energy Management constituted by sensors and a Fuzzy logic-based software, connected to a neural structure of self-learning commanding different types of actuators, operating on different points of the system, including the electric devices directly connected to the refrigerant compressors (inverters) which finalize the energetic saving accumulating its various surplus moments, allows the regulation and makes the photovoltaic source appear linear and adequate in front of the whole system during the period of use, allowing it to overcome the characteristics of irregularity and non-programmability.

The key elements of the Energy Management are:

### Predictivity:

Ability to create and analyze statistic data starting from pictured scenarios or from the data obtained by management planning plans for the activity.

*Self-learning:* ability to develop the management scenarios keeping into consideration what monitored in the previous periods making decisions and modifying the management plans of the system.

- *Adjustment speed:* the actuators and the refrigeration system need to have such an adequate speed in order to maximize the efficiency of the refrigerating system and the efficacy of the Energy Management (rapid conversion of *Photovoltaic energy into Thermal Energy (cold).*

The choice of concentrating the management and the control of the system around an Energy Management complex is first of all justified by the will to portray each working scenario, in order to evaluate and fix it on a statistic level. The aperiodicity of the events connected to the photovoltaic generator, together with the demand for storage and thus the plans for the goods flows are pictured and filed in a database which will contain a statistic archive on which it will be possible to found predictive analyses needed to modulate the energetic asset of the whole system operation.

At the beginning the data constituting the start up of the predictive analysis will be those extracted by a separate analysis of the photovoltaic generator system and the refrigerator user. These data, cross-checked and conveniently elaborated by the Energy Manager algorithms will constitute the database on which the whole management system *"neural self learning network"* will create the logic prerequisites of intervention for the correct fulfillment of the most efficient energy-management plan to reach the goal (autonomous management of an energy-consuming business as a cold storehouse with the only photovoltaic powering).

In order to keep the efficiency values of the Energy Manager high, the fulfillment/control and refrigerator systems themselves need to have very short reaction times. In this regard their dimensioning must be aimed at realizing an immediate conversion of the photovoltaic energy into refrigerating energy and an excellent management of the system accumulation and switching.

Thus the conversion of Photovoltaic Energy into Refrigerating Energy is fully speeded up overdimensioning the management systems of the refrigerating machineries; in fact the Energy Manager interface, with the inverter systems of the refrigerator units, will allow fast startings and machineries placements at the height of the output required. The system switching will be regulated by the hardware part of the Energy Management actually called Energy Manager that, by developing the most suitable scenario for the required operation, will indicate the most appropriate generator choosing the most adequate consumption solution.

The Energy Manager, that is the operational part of the Energy Management system, will create a programmability and a maximization of the energy consumption needed by the system, on the basis of a predictive analysis of the photovoltaic energy availabilities and creating in turn suitable margins with internal inertial accumulations.

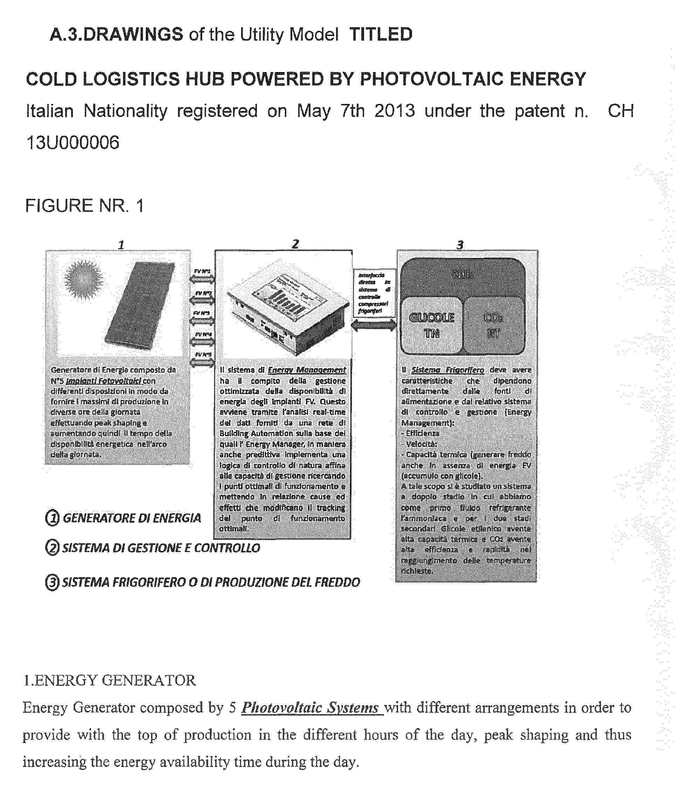

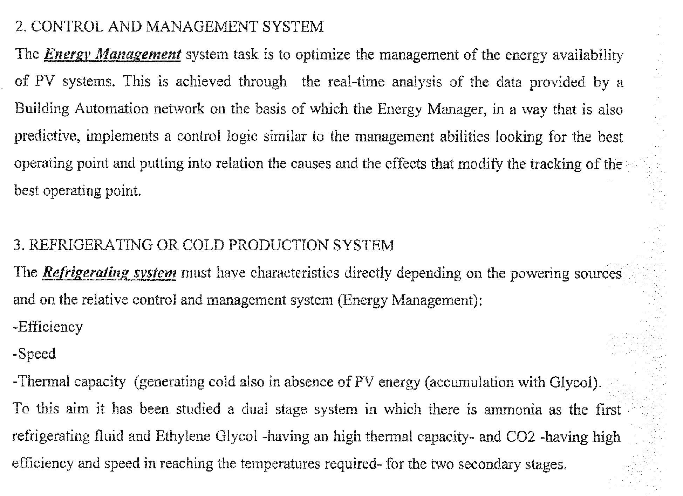

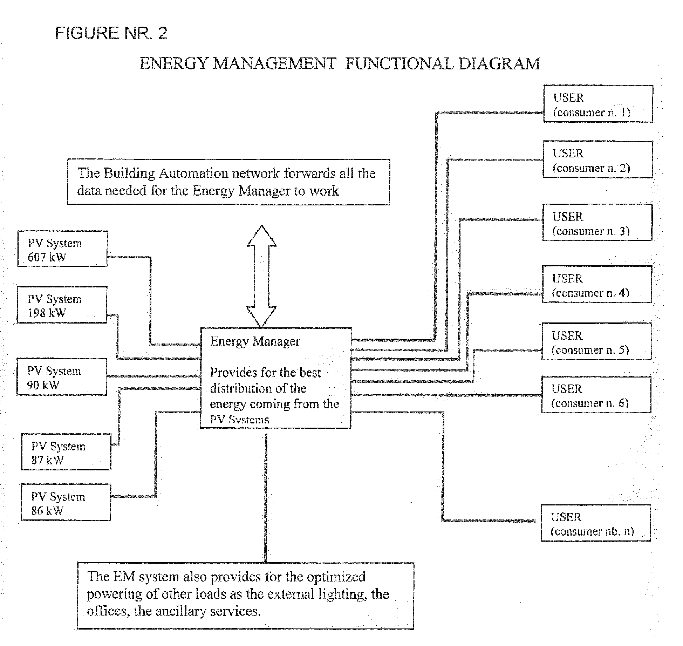

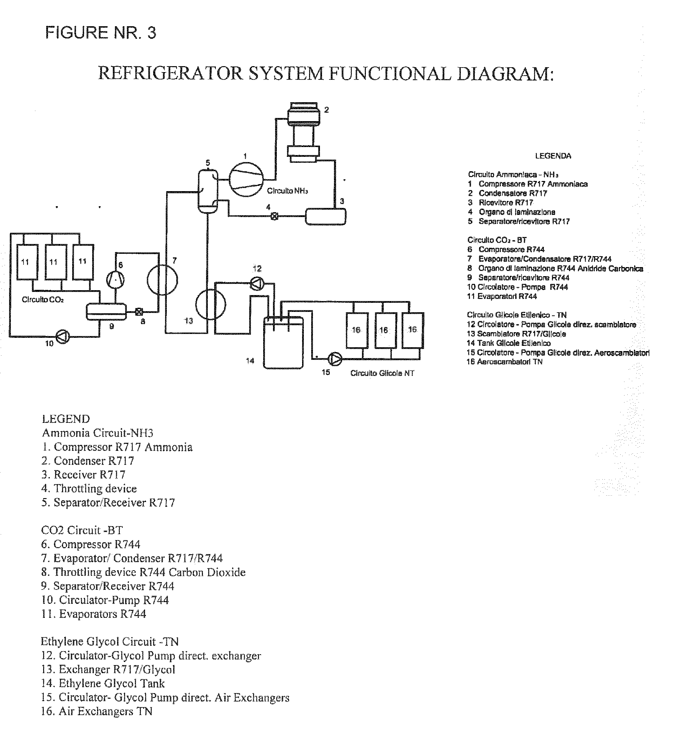

## Claims

1. *The energy produced by the photovoltaic positioned on the roof of a cold storage for food is used alone, without the need for additional external electricity or by other generators, to power the enginees of refrigeration.*

2. *The electrical energy is converted into cold and put into indoor storage areas in amount excees the needs instant refrigerators at the time of maximum solar radiation for cold storage of surplus, that can be re-used at night or low solar production, thanks to the characteristic of refrigeration system.*

3. *An intelligent network, called **"Energy Management"** constituted by sensors and a Fuzzy logic-based software, connected to a neural structure of self-learning commanding different types of actuators, operating on different points of the system, allows the regulation and makes the photovoltaic source appear linear and adequate in front of the whole system during the period of use, allowing it to overcome the characteristics of irregularity and non-programmability.*
